(19) Europäisches Patentamt
European Patent Office
Office européen des brevets

(11) **EP 2 442 136 B1**

(12) **EUROPEAN PATENT SPECIFICATION**

(45) Date of publication and mention
of the grant of the patent:
**03.06.2020 Bulletin 2020/23**

(51) Int Cl.:
***G01S 17/95*** *(2006.01)*    ***G01S 17/58*** *(2006.01)*

(21) Application number: **11184677.0**

(22) Date of filing: **11.10.2011**

(54) **Multi-lidar system**

Multi-LIDAR-System

Système à plusieurs lidars

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2010 JP 2010230711**

(43) Date of publication of application:
**18.04.2012 Bulletin 2012/16**

(73) Proprietor: **Japan Aerospace Exploration Agency
Chofu-shi,
Tokyo 182-8522 (JP)**

(72) Inventor: **Inokuchi, Hamaki
Tokyo 182-8522 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 2 133 712        US-A- 5 216 477
US-A1- 2006 262 324    US-A1- 2007 073 486
US-A1- 2011 043 785**

• **SCHMITT ET AL: "The AWIATOR airborne LIDAR
turbulence sensor", AEROSPACE SCIENCE AND
TECHNOLOGY, ELSEVIER MASSON, FR, vol. 11,
no. 7-8, 1 November 2007 (2007-11-01), pages
546-552, XP022329043, ISSN: 1270-9638, DOI:
10.1016/J.AST.2007.03.006**
• **INOKUCHIH H ET AL: "Development of an
Onboard Doppler LIDAR for Flight Safety",
JOURNAL OF AIRCRAFT, AIAA, RESTON, VA,
US, vol. 46, no. 4, 1 September 2007 (2007-09-01),
pages 1411-1415, XP008139384, ISSN: 0021-8669**

**Description**

BACKGROUND OF THE INVENTION

1. Field of the Invention

The present invention relates to a LIDAR technique for measuring a distant airflow on the basis of the Doppler effect of light by emitting a laser beam into the atmosphere and receiving light scattered into the atmosphere from the laser beam, and more particularly to a multi-LIDAR system in which a combination of two or more LIDAR devices are installed in an aircraft to prevent accidents caused by air turbulence.

2. Description of the Related Art

In recent years, air turbulence has come to attention as a major cause of aircraft accidents, and therefore research and development have been undertaken into a Doppler LIDAR employing laser light as a device that is installed in an aircraft in order to detect turbulence in advance (see "Development of an Onboard Doppler LIDAR for Flight Safety", H. Inokuchi, H. Tanaka, and T. Ando, Journal of Aircraft, Vol. 46, No. 4, pp. 1411-1415, AIAA, July-August 2009, for example). Note that LIDAR is a remote observation method employing light, and is an abbreviation of "Light Detection And Ranging". The term "Doppler LIDAR" is used because an emitted light beam is scattered by minute aerosols floating in the atmosphere, resulting scattered light is received by the Doppler LIDAR, and a wind velocity is measured by measuring a frequency variation (a wavelength variation) therein caused by the Doppler effect.

To use the Doppler LIDAR to prevent accidents caused by turbulence in an aircraft, a method of transmitting information relating to turbulence ahead of the aircraft in a flying direction to a pilot (a human pilot or an autopilot) so that the pilot can take countermeasures such as avoiding the turbulence or switching on the seatbelt signs and a method of reducing shaking of an airframe occurring when the aircraft collides with the turbulence by transmitting the turbulence information to an onboard computer so that a control surface is controlled automatically (see "Gust Alleviation via Robust Model Predictive Control Using Prior Turbulence Information, Masayuki Sato, Nobuhiro Yokoyama, Atsushi Satoh, Journal of the Japan Society for Aeronautical and Space Sciences, Vol. 57, No. 668, 2009, for example) may be employed. In the former method, sufficient time is needed to implement the countermeasures, and therefore long-distance measurement is required. In the latter method, an airflow vector must be measured in at least two dimensions including a vertical dimension and a horizontal dimension. Hence, the present inventor previously proposed an "Airborne Device for preventing Turbulence-induced Accidents" in Japanese Patent Application No. 2009-277379. In this invention, an optical remote airflow measurement device of a Doppler LIDAR system employing laser light is used so that under normal conditions, distant turbulence can be detected by fixing a laser emission bearing in a flight direction and increasing an integration time of a reception signal (a turbulence detection mode), and when turbulence is detected, a planar distribution of the turbulence can be displayed by performing scanning with the laser emission bearing set in a horizontal direction and switching an image display to a two-dimensional display (a two-dimensional display mode).

In addition to the configuration described above, when it is determined that an area of turbulence cannot be avoided in a turbulence-induced accident prevention method according to this invention, a two-dimensional vector of the turbulence is measured by performing scanning with the laser emission bearing set in a vertical direction so that the turbulence information can be output for the purpose of automatic control surface control (a gust alleviation mode).

In the turbulence detection mode, however, the planar distribution of the turbulence is not learned and cannot therefore be used to determine whether or not to avoid the turbulence. Further, with the current technical state of optical amplifiers suitable for installation in an aircraft, a large increase in an effective range cannot be expected due to limits on laser output. In the shaking reduction mode, meanwhile, it is known that a shaking reduction effect typically increases as a measurement period becomes shorter. However, the measurement period is mechanically limited by the use of a mechanism for performing a scan along the bearing of the laser beam. Moreover, when the measurement period is shortened, the integration time of the reception signal becomes shorter, and as a result, a measurement precision deteriorates.

A method for determining the frequency shift in a laser system by transmitting an outgoing laser beam, receiving an incoming laser beam having a frequency shift, acquiring a first signal by transmitting a portion of the incoming laser beam to an energy monitor detector and a second signal by transmitting a portion of the incoming laser beam through a filter to a detector, deriving a first normalized signal which is proportional to the transmission of the filter at the frequency of the incoming laser beam, deriving a second normalized signal which is proportional to the transmission of the filter at the frequency of the outgoing laser beam, and determining the frequency shift by processing the first and second normalized signals, is described in US 5,216,477.

## SUMMARY OF THE INVENTION

An object of the present invention is to provide a device that can solve the problems described above, or in other words, to provide a device enabling measurement in a wider range than a conventional LIDAR system and capable of measuring airflow information, which is used to reduce shaking of an airframe when an aircraft collides with turbulence, in a shorter period, and a device having corresponding functions.

To achieve this object, a multi-LIDAR system according to the present invention includes at least two optical remote airflow measurement devices of a Doppler LIDAR system employing laser light that are provided in a fixed relative position relationship, has functions for emitting lasers of identical wavelengths from the respective devices and receiving scattered light by the respective devices, thereby improving redundancy with respect to defects, and improves a detectability by increasing an integration amount of respective measurement signals.

Further, the multi-LIDAR system according to the present invention further includes a mechanism for performing scans independently in optical axis orientation directions of the lasers emitted from the respective optical remote airflow measurement devices, whereby a measurement area can be widened in a left-right direction or a vertical direction.

Furthermore, the multi-LIDAR system according to the present invention further includes a mechanism for performing a scan by emitting laser beams simultaneously in a left-right direction after vertically shifting optical axis orientation directions of the lasers emitted from the respective optical remote airflow measurement devices, whereby vertical components of a wind velocity can be measured in a single measurement.

The multi-LIDAR system according to the present invention is formed from an optical remote airflow measurement device that emits (transmits) a pulsed laser beam into the atmosphere as a transmission signal, receives scattered laser light generated when the laser beam is scattered by aerosols in the atmosphere as a reception signal, and measures a wind velocity of an airflow in a distant area on the basis of a Doppler shift amount between the transmission signal and the reception signal. Taking into account the fact that a detectability of the received reception signal improves in accordance with the number of integrations of the pulse light, multiple Doppler LIDARs are provided so that a more distant airflow can be monitored. By providing multiple Doppler LIDARs, an improvement in redundancy when a defect occurs can also be expected.

Further, by orienting respective optical axes of the laser beams emitted by the multiple LIDARs independently in the left-right direction or the vertical direction rather than in a single direction, a measurement range can be widened, and as a result, an area of turbulence can be recognized more easily.

To obtain information relating to an airflow located ahead of the airframe, which is used to perform shaking reduction control, information indicating a two-dimensional vector in a vertical plane of the airflow is required. However, by measuring at least upward and downward directions simultaneously, the airflow information can be obtained more quickly than with a method of performing a scan along a single axis, and therefore a control surface can be controlled effectively.

In the multi-LIDAR system according to the present invention, multiple Doppler LIDARs are provided such that a plurality of optical axes exist. Therefore, during normal direct flight, long-distance measurement can be performed by setting the respective laser light emission bearings in an identical direction, and when modification of the flight bearing is planned, the optical axis of one of the devices can be oriented toward the planned flight bearing. Further, when an altitude change is planned, the optical axis of one of the devices can be oriented in a planned flight altitude direction. Thus, it is possible to respond to various requirements. Further, by measuring at least upward and downward directions simultaneously, a two-dimensional vector of the airflow can be calculated quickly, and by using resulting measured airflow data to perform shaking reduction control, which is a function of a conventional autopilot, on the control surface, vertical shaking of the airframe can be reduced effectively. Hence, with the multi-LIDAR system according to the present invention, a favorable effect can be expected in terms of preventing aircraft accidents caused by turbulence.

Furthermore, with the multi-LIDAR system according to the present invention, an enlargement of the measurement range or a reduction in the measurement period is realized, as described above. Moreover, by forming the system from multiple LIDARs, redundancy with respect to defects is increased.

## BRIEF DESCRIPTION OF THE DRAWINGS

Fig. 1 is a block diagram showing an example in which a multi-LIDAR system according to the present invention is formed using three Doppler LIDAR transceiving units;

Fig. 2 is an illustrative view showing a principle of airflow vector calculation when laser emission bearings are set in upward and downward directions;

Fig. 3 is an illustrative view showing an example in which a Doppler LIDAR is installed in an aircraft in duplex;

Fig. 4 is an illustrative view showing a method of performing scans independently along bearings divided between two Doppler LIDARs in order to enlarge an overall observation area;

Fig. 5 is an illustrative view showing a method of performing observation in a horizontal direction and an altitude modification direction simultaneously when an altitude modification is planned during level flight;

Fig. 6 is an illustrative view showing a constitutional example of the multi-LIDAR system according to the present invention, constituted by five small transmission systems and a single reception telescope; and

Fig. 7 is an illustrative view showing how five bearings can be observed simultaneously without scanning by providing five optical systems.

## DESCRIPTION OF THE PREFERRED EMBODIMENTS

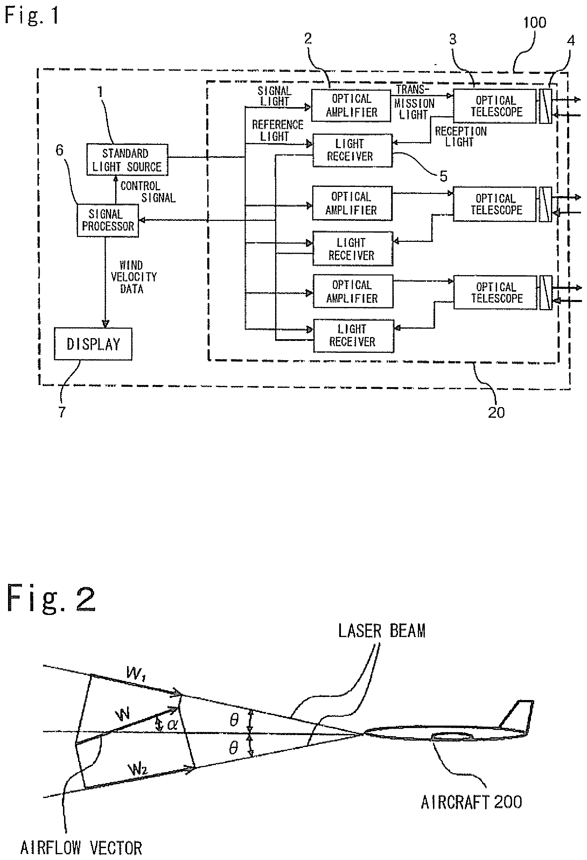

The present invention will be described in further detail below through embodiments shown in the drawings. Fig. 1 is a block diagram showing an example in which a multi-LIDAR system according to the present invention is formed using three Doppler LIDAR transceiving units.

A weak single-wavelength laser beam generated by a standard light source 1 is amplified by an optical amplifier 2. The amplified laser beam is emitted into the atmosphere via an optical telescope 3, and an emission bearing thereof can be modified by a scanner 4. Laser beams of an identical wavelength emitted into the atmosphere from respective optical telescopes 3 are scattered by aerosols floating in the atmosphere, and returning light is received by the respective optical telescopes 3. The received light undergoes wavelength variation based on the Doppler effect in accordance with a movement velocity of the aerosols, and therefore a beat frequency is determined in a photo receiver 5 by synthesizing reference light from the standard light source 1 with the received light. The determined beat frequency is a Doppler shift, and takes a numerical value commensurate with an optical axis direction wind velocity component. Hence, the wind velocity is determined by a signal processor 6, and a degree of turbulence is calculated from an amount of variation therein. The detected turbulence is displayed on a display 7 and can be monitored by a pilot during flight. A typical Doppler LIDAR is based on the principles described above, but by forming an optical system 20 from three each of the optical amplifier 2, the optical telescope 3, the scanner 4, and the light receiver 5, the following advantages are obtained.

Firstly, when the laser emission bearings of the three optical telescopes 3 are identical, a scattering intensity of the laser beam is tripled in comparison with a case where only one optical telescope is provided. The number of integrations of the received light is also tripled, and therefore a maximum observation range can be expanded. Furthermore, by providing pluralities of the optical amplifier 2 and the light transceiver 5, which deteriorate over time comparatively easily, and the optical telescope 3, which may be soiled by insects and the like adhering to a lens thereof, redundancy with respect to defects is increased.

A detectability D of an integrated signal is typically expressed by Equation 1, where SNR is commensurate with the scattering intensity of the laser beam and, together with the number of integrations N, greatly affects the detectability D.

$$D = SNR \times \sqrt{N} \qquad\qquad (1)$$

where

SNR is a detectability of one pulse of the reception signal, and
N is the number of integrations of the reception signal.

In other words, an effective signal is simply added up by integrating the reception signal, and unnecessary noise is canceled out and reduced by integrating the reception signal. As a result, the detectability is improved to the equivalent of a multiple of a square root of the number of integrations of the reception signal by integrating the reception signal. Since a Doppler LIDAR has a characteristic whereby a signal intensity decreases as a measurement range increases, the improvement in the detectability leads to an enlargement in an effective measurement range, and therefore turbulence can be detected earlier.

In another example, when the laser emission bearings are varied independently by the scanners 4, an observation area can be widened, and the pilot can consciously monitor an area into which the aircraft is flying.

When the laser emission bearings are shifted in a vertical direction, front-rear direction and vertical direction components of an airflow can be determined in a single measurement. In comparison with a method of performing a scan along an optical axis, airflow information can be updated in a shorter period, and the updated airflow information can be used effectively as control surface control input for reducing shaking of an airframe. When the multi-LIDAR system is used for this purpose, there is no need to perform a scan with the laser emission optical axis set in a lateral direction.

Fig. 2 shows an example in which the laser emission bearings are set in upward and downward directions. In Fig. 2, W1 and W2 are measurement values obtained by the Doppler LIDARs, and are expressed respectively by following

equations.

$$W_1 = W\cos(\alpha + \theta)$$

$$W_2 = W\cos(\alpha - \theta) \tag{2}$$

where

W is an airflow vector,
$W_1$ is a measurement value obtained by an upwardly oriented LIDAR,
$W_2$ is a measurement value obtained by a downwardly oriented LIDAR,
$\alpha$ is an angle formed by the airflow vector and an airframe axis, which matches an angle of attack when the airflow is stable, and
$\theta$ is an angle formed by a measurement center direction and the upwardly oriented and downwardly oriented LIDARs.

Hence, $\alpha$ can be determined from Equation 3.

$$\alpha = (\cos^{-1}(W_1/W) + \cos^{-1}(W_2/W))/2 \tag{3}$$

W can be determined from either part of Equation 4, and for practical purposes, an average value of the two is employed.

$$W = W_1/\cos(\alpha + \theta)$$

$$W = W_2/\cos(\alpha - \theta) \tag{4}$$

W and $\alpha$ determined in the manner described above are used as input of an autopilot.

[Examples]

(First Example)

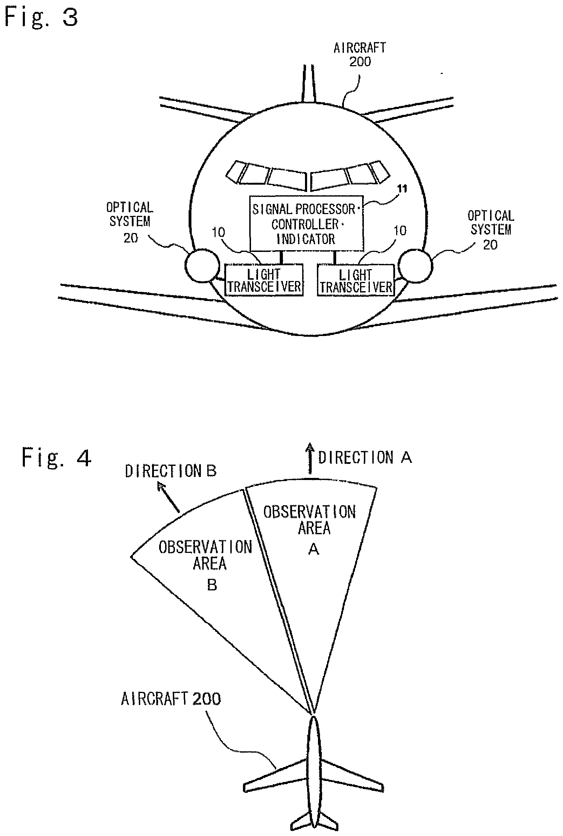

In a Doppler LIDAR currently being developed by the Japan Aerospace Exploration Agency (JAXA), developers are aiming for a measurement range of approximately 9 km by setting a laser pulse frequency at 4 kHz and obtaining a single datum at a reception light integration time of 4000 pulses, or in other words one second. When the Doppler LIDAR is provided in duplex, as shown in Fig. 3, the scattering intensity of the laser beam is doubled, and therefore the aforementioned SNR and the number of integrations N are also doubled. Accordingly, the detectability D illustrated in Equation 1 is increased by approximately 2.8 times. D is substantially inversely proportionate to the square of the measurement range, and therefore, by providing the Doppler LIDAR in duplex, an increase in the effective measurement range of approximately 1.7 times to approximately 15 km can be expected. With current technology, it is extremely difficult to achieve an increase in laser output, and therefore this method can be employed as a radical method of expanding the effective measurement range. Moreover, when a defect occurs in one of the Doppler LIDARs, the other Doppler LIDAR can be used, and therefore an improvement in redundancy can also be expected.

(Second Example not according to the present invention)

When a function for performing a scan along the bearing of the optical system is added and a one-way scanning time is set at four seconds in a case where an integration time of one second is required for measurement, as described in the first example, a bearing resolution is one quarter of a scanning angle. When the scanning angle is increased, the bearing resolution decreases, and when the one-way scanning time is increased, the scanning time cannot keep up with advancement of the aircraft. Further, when the integration time is shortened, measurement noise increases. Therefore, as shown in Fig. 4, an overall observation area is enlarged by performing scans independently along bearings divided between the two Doppler LIDARs. In a specific method of use, the presence of turbulence is checked by monitoring an observation area A using the two Doppler LIDARs during direct flight in a bearing A, and monitoring an observation area B using one of the Doppler LIDARs when the flight bearing is modified to B.

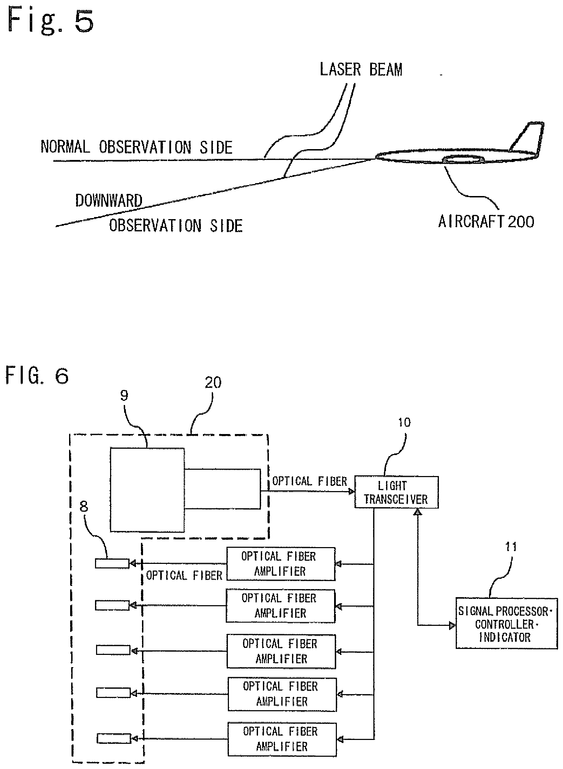

As shown in Fig. 5 according to another not inventive example, likewise in a case where an altitude modification is planned, a normal observation plane in a horizontal plane is monitored by the two Doppler LIDARs during level flight, and when the flight altitude is to be lowered, the presence of low-altitude turbulence is checked prior to the descent by orienting one of the Doppler LIDARs downward and monitoring a lower observation plane. A similar operation is performed during an ascent.

(Third Example)

Fig. 6 shows an example in which the optical system 20 is constituted by five small transmission systems and a single reception telescope. The transmission systems are constituted by transmission telescopes 8 and optical fiber amplifiers. In this example, only one reception telescope is provided, and therefore independent scans cannot be performed. However, increases in the effective measurement range and the redundancy can be expected. Note that an optical fiber amplifier (FA) is a product that exhibits a low laser output but is small and energy efficient. Therefore, optical fiber amplifiers can be put to practical use at low cost even when multiple optical fiber amplifiers are provided. Alternatively, a large number of small, energy efficient, low cost laser diodes (LD) may be used.

(Fourth Example)

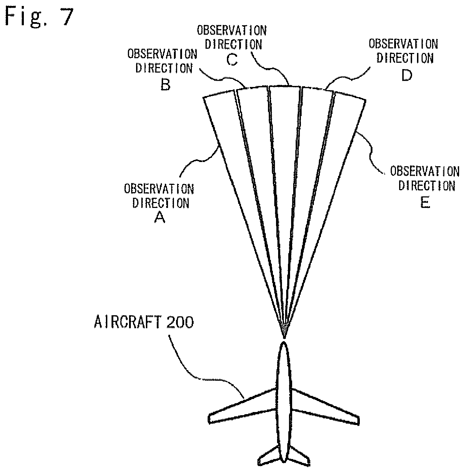

In a case where five optical systems 20 are provided, five bearings can be observed simultaneously without scanning, as shown in Fig. 7, and therefore the bearing resolution does not decrease even when the integration time is lengthened.

(Fifth Example)

When the multi-LIDAR system is used to measure input information for controlling the control surface, it is sufficient to be able to measure an airflow approximately 500 m ahead, and therefore the integration time of the reception light can be shortened in comparison with a case where the multi-LIDAR system is used to monitor an area of turbulence.
When the integration time of the reception light is set at 0.1 seconds, a 10 Hz measurement period is obtained, and with this measurement period, it is possible to perform both fine control for improving passenger comfort and control for reducing severe shaking that may cause accidents. By measuring an airflow that the aircraft will encounter in one to two seconds, it is possible to predict variation in an airspeed and the angle of attack, and by inputting this information into an FMS (Flight Management System), the control surface can be controlled automatically to reduce shaking of the airframe.

[Use possibility in the industry]

Although a Doppler LIDAR is able to measure a distant airflow even in clear skies, the shortness of an effective range thereof has been pointed out by airliner pilots, and this problem has proved a hurdle to practical application. By applying the present invention, however, an increase in the effective range, a reduction in the measurement period, and an increase in redundancy are achieved, and therefore an improvement in practical utility is foreseen. The present invention may also be applied to a ground-based device, and may also be applied to an atmospheric observation LIDAR as well as a Doppler LIDAR.

[The explanation of the mark]

| | |
|---|---|
| 1 A standard light source | 2 A light amplifier |
| 3 An optical microscope | 4 A scanner |
| 5 A light receiver | 6 A signal processing machine |
| 7 An indicator | 8 A transmission telescope |
| 9 A reception telescope | 10 A light transceiver |
| 11 Signal processor, controller, indicator | |
| 20 An optical system | 100 Multi-Lidar System |
| 200 An aircraft | |

**Claims**

**1.** A multi-LIDAR system (100), comprising at least two optical remote airflow measurement devices of a Doppler LIDAR system employing laser light that are provided in a fixed relative position relationship,
wherein the multi-LIDAR system (100) comprises a weak single-wavelength laser beam generated by a standard light source;
each remote airflow measurement device comprises an optical amplifier (2),
an optical telescope (3) and a light receiver (5) for emitting an amplified laser beam into the atmosphere and for receiving returning light scattered by aerosols floating in the atmosphere;
**characterized in that**
the at least two optical remote airflow measurement devices measure an air flow from a beat frequency determined in the light receiver (5) by synthesizing reference light from the standard light source with the received light,
and wherein the laser emission bearings of the optical telescopes of said remote airflow measurement devices are identical, so that a detectability D is improved by increasing an integration amount of respective measurement signals as shown in the following formula

$$D = SNR \times \sqrt{N} \qquad\qquad (1)$$

where SNR is a detectability of one pulse of the reception signal, and N is the number of integrations of the reception signal.

2. The multi-LIDAR system according to claim 1, wherein
the emission system emits the two or more laser beams in identical emission bearings via different optical telescopes and the reception system receives the returning light beams via the optical telescopes, and
the air flow is measured in the airflow measurement by performing integration of the reception signals based on the light beams received by the reception system for a predetermined period.

3. The multi-LIDAR system according to claim 2, wherein
a mode in which the scan is performed by emitting laser beams simultaneously in a left-right direction after vertically shifting optical axis orientation directions of the lasers emitted from the respective optical remote airflow measurement devices, whereby vertical components of a wind velocity is measured in a single measurement.

**Patentansprüche**

1. Multi-LIDAR-System (100) mit mindestens zwei optischen Luftstrom-Fernmessvorrichtungen eines mittels Laserlichts betriebenen Doppler-LIDAR-Systems, die in einer festen relativen Positionsbeziehung vorgesehen sind,
wobei das Multi-LIDAR-System (100) einen schwachen Einzel-Wellenlängen-Laserstrahl aufweist, der durch eine Standardlichtquelle erzeugt wird;
wobei jede Luftstrom-Fernmessvorrichtung einen optischen Verstärker (2) aufweist,
ein optisches Teleskop (3) und einen Lichtempfänger (5) zum Aussenden eines verstärkten Laserstrahls in die Atmosphäre und zum Empfangen von zurückkehrendem Licht, das durch in der Atmosphäre schwebende Aerosole gestreut wird;
**dadurch gekennzeichnet, dass**
die mindestens zwei optischen Luftstrom-Fernmessvorrichtungen einen Luftstrom aus einer Schwebungsfrequenz messen, welche in dem Lichtempfänger (5) durch Synthetisieren von Referenzlicht aus der Standardlichtquelle mit dem empfangenen Licht bestimmt wird,
und wobei die Laseremissionslager der optischen Teleskope der Luftstrom-Fernmessvorrichtungen identisch sind, so dass eine Detektierbarkeit D durch Erhöhen einer Integrationsmenge der jeweiligen Messsignale verbessert wird, wie in der folgenden Formel dargestellt

$$D = SNR \times \sqrt{N} \qquad\qquad (1)$$

wobei SNR eine Detektierbarkeit eines Pulses des Empfangssignals ist und N die Anzahl der Integrationen des Empfangssignals ist.

2. Multi-LIDAR-System nach Anspruch 1, wobei
das Emissionssystem die zwei oder mehr Laserstrahlen mit identischen Emissionslagern über unterschiedliche optische Teleskope ausstrahlt und das Empfangssystem die zurückkehrenden Lichtstrahlen über die optischen Teleskope empfängt, und

der Luftstrom in der Luftstrommessung gemessen wird, indem eine Integration der Empfangssignale basierend auf den von dem Empfangssystem empfangenen Lichtstrahlen für einen vorbestimmten Zeitraum durchgeführt wird.

**3.** Multi-LIDAR-System nach Anspruch 2, wobei

ein Modus, in dem die Abtastung durchgeführt wird durch gleichzeitiges Aussenden von Laserstrahlen in eine Links-Rechts-Richtung nach dem vertikalen Verschieben der Orientierungsrichtungen der optischen Achse der von den jeweiligen optischen Luftstrom-Fernmessvorrichtungen ausgesendeten Laser, wobei Vertikalkomponenten einer Windgeschwindigkeit in einer Einzelmessung berechnet werden.

**Revendications**

**1.** Système à plusieurs lidars (100), comprenant au moins deux dispositifs optiques de mesure d'écoulement d'air à distance d'un système LIDAR Doppler employant une lumière laser qui sont prévus dans une relation de position relative fixe,

dans lequel le système à plusieurs lidars (100) comprend un faisceau laser à une seule longueur d'onde faible généré par une source de lumière classique ;

chaque dispositif de mesure d'écoulement d'air à distance comprend un amplificateur optique (2),

un télescope optique (3) et un récepteur de lumière (5) pour émettre un faisceau laser amplifié dans l'atmosphère et pour recevoir une lumière de renvoi diffusée par des aérosols flottant dans l'atmosphère ;

**caractérisé en ce que**

les au moins deux dispositifs optiques de mesure d'écoulement d'air à distance mesurent un écoulement d'air à partir d'une fréquence de battement déterminée dans le récepteur de lumière (5) par synthèse d'une lumière de référence provenant de la source de lumière classique avec la lumière reçue,

et dans lequel les supports d'émission laser des télescopes optiques desdits dispositifs de mesure d'écoulement d'air à distance sont identiques, de telle sorte qu'une capacité de détection D est améliorée par augmentation d'une quantité d'intégration de signaux de mesure respectifs, comme montré dans la formule suivante

$$D = SNR \times \sqrt{N} \qquad\qquad (1)$$

où SNR est une capacité de détection d'une impulsion du signal de réception, et N est le nombre d'intégrations du signal de réception.

**2.** Système à plusieurs lidars selon la revendication 1, dans lequel

le système d'émission émet les deux faisceaux laser ou plus dans des supports d'émission identiques via des télescopes optiques différents et le système de réception reçoit les faisceaux de lumière renvoyés via les télescopes optiques, et

l'écoulement d'air est mesuré dans la mesure d'écoulement d'air par réalisation d'une intégration des signaux de réception sur la base des faisceaux de lumière reçus par le système de réception pendant une période prédéterminée.

**3.** Système à plusieurs lidars selon la revendication 2, dans lequel

un mode dans lequel le balayage est effectué par des faisceaux laser d'émission simultanément dans une direction gauche-droite après décalage vertical de directions d'orientation d'axe optique des lasers émis à partir des dispositifs optiques de mesure d'écoulement d'air à distance respectifs, moyennant quoi des composantes verticales d'une vitesse de vent sont mesurées en une seule mesure.

Fig. 1

Fig. 2

Fig. 3

Fig. 4

Fig. 5

LASER BEAM

NORMAL OBSERVATION SIDE

DOWNWARD
OBSERVATION SIDE

AIRCRAFT 200

FIG. 6

| | 9 | 20 | | 10 | |
| | | | OPTICAL FIBER | LIGHT TRANSCEIVER | |

8

OPTICAL FIBER

OPTICAL FIBER

| OPTICAL FIBER AMPLIFIER |
| OPTICAL FIBER AMPLIFIER |
| OPTICAL FIBER AMPLIFIER |
| OPTICAL FIBER AMPLIFIER |
| OPTICAL FIBER AMPLIFIER |

11

SIGNAL PROCESSOR·
CONTROLLER·
INDICATOR

# Fig. 7

OBSERVATION DIRECTION B
OBSERVATION DIRECTION C
OBSERVATION DIRECTION D
OBSERVATION DIRECTION A
OBSERVATION DIRECTION E
AIRCRAFT 200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009277379 A

- US 5216477 A

**Non-patent literature cited in the description**

- Development of an Onboard Doppler LIDAR for Flight Safety. **H. INOKUCHI ; H. TANAKA ; T. ANDO.** Journal of Aircraft. AIAA, July 2009, vol. 46, 1411-1415

- **MASAYUKI SATO ; NOBUHIRO YOKOYAMA ; ATSUSHI SATOH.** Gust Alleviation via Robust Model Predictive Control Using Prior Turbulence Information. *Journal of the Japan Society for Aeronautical and Space Sciences,* 2009, vol. 57 (668